# EUROPEAN PATENT SPECIFICATION

(11) **EP 1 980 081 B1**
(45) Date of publication and mention of the grant of the patent: **28.07.2010**
(21) Application number: 07705341.1
(22) Date of filing: 18.01.2007
(51) Int. Cl.: H04L 29/06, G06F 17/30

(54) **A METHOD OF FILTERING HIGH DATA RATE TRAFFIC**
VERFAHREN ZUR FILTERUNG VON DATENVERKEHR MIT HOHER RATE
PROCÉDÉ DE FILTRAGE DE TRAFIC À HAUT DÉBIT

(30) Priority: 31.01.2006 GB 0601832
(43) Date of publication of application: 15.10.2008
(73) Proprietor: ROKE MANOR RESEARCH LIMITED, Romsey, Hampshire SO51 0ZN (GB)
(72) Inventor: DAVIS, Simon, Romsey Hampshire SO51 7LX (GB)
(74) Representative: Payne, Janice Julia
(86) International application number: PCT/GB2007/050027
(87) International publication number: WO 2007/088397

(56) References cited:
- EP-A2- 1 284 561
- US-A1- 2004 153 460
- US-A1- 2005 234 915
- US-B1- 6 789 116

## Description

This invention relates to a method of filtering high data rate traffic based on its content, in particular in firewalls or for lawful intercept.

There are a number of circumstances in which it is permissible and desirable for a third party to review data traffic before it reaches its final destination. One reason for this is to determine whether there is any improper or damaging content, which the reviewer wishes to exclude from their system, for example, as part of a firewall for a corporate or private network, typically using content based searching or email or internet protocol addresses. Another is in the field of lawful intercept i.e. when law enforcement agencies conduct electronic surveillance of communications, usually approved by the government of the day.

Typically, the data under review is being transmitted over a high bandwidth communication link and the data rates are such that a conventional server or personal computer (pc) cannot search the content at these rates. For example, a pc might have difficulty in operating at more than 1Gbit per second, whereas the communication link may be operating at 10Gbit/s or more.

US2004/0153460 describes a system for reducing the size of a database by scanning the content and tagging entries which are superfluous, so that these can be deleted.

In accordance with the present invention, a method of filtering high data rate traffic based on its content comprises identifying candidate fixed size partial strings within the traffic; comparing characters within the candidate fixed size partial string with a content addressable memory containing wanted partial string values and identifying matching traffic; wherein the candidate fixed size partial string content includes at least one anchor character; wherein the candidate fixed size partial string size is set to a predetermined number of characters adjacent to the anchor character; and, wherein candidate fixed size partial strings ending in an anchor character are compared with wanted partial string values in the content addressable memory.

The present invention cuts down the processing requirement in that only those sections of the data stream for which a specific partial string match, containing a wanted set of partial keywords, is found are forwarded for further processing. The partial strings have a fixed size which is predetermined as part of system analysis, being a trade-off between speed (smaller is better) and false hit probability (larger size leads to less false hits).

The anchor character is typically an essential character, such as an @ in an email address, or a final character in a keyword.

Preferably, a hash function is applied to the candidate fixed size partial string to reduce the length of the partial string to be less than or equal to a width of the content addressable memory.

Preferably, padding characters are inserted at either end of the candidate fixed size partial string, when the number of characters in the candidate fixed size partial string is less than the number of character spaces available in a width of the content addressable memory.

The partial string may be a keyword in a block of text, but preferably, the candidate fixed size partial string comprises one of a partial email address, an internet protocol address, a source or destination port number, or other numeric code.

Preferably, matching traffic is forwarded to a secondary processor and store for further processing.

This simplifies the high speed equipment required, as all storage and further processing is done at a lower than real-time data rate, so is less resource intensive. Typically, the secondary processor is a personal computer.

An example of a method of filtering high data rate traffic based on its content in accordance with the present invention will now be described with reference to the accompany drawings in which:
Figure 1 illustrates a first example of the method of the present invention using direct ternary content addressable memory; and,
Figure 2 illustrates a second example of the method of the present invention including a core hash algorithm.

One approach to the problem of lack of processing speed is to filter the traffic of interest based on IP address, for example those of particular email servers, and/or based on port number, to reduce the traffic volume to a level that can be handled by software processes running on a conventional processing platform. The problem with this approach is that line rate filtering is currently relatively simple, so that port numbers, such as for SMTP email protocol, or IP addresses of, for instance, e-mail servers, need to be known in advance. If certain traffic does not use well known ports, or a more generic capability is required, such as searching for a specific word in a particular context in all traffic, rather than searching for a specific email server, then all packets must be inspected at a line rate which cannot be achieved with software on a general purpose processor. Another problem with needing to know the addresses, or port numbers, is updating that information if the server to which they relate is changed.

The present invention addresses these problems by introducing an algorithm that is split between a programmable front line processor, such as a network processor (NP), at line rate to filter packets and/or sessions that may be of interest and a second line processor, so that the data rate handled by the second line processor is reduced to one slow enough to manage, despite the high data rate of the incoming traffic. Other solutions to this problem either require custom hardware which is expensive and inflexible, or the use of multiple processing platforms to handle the line rate packet processing, which is also expensive.

In the present invention, a high-speed partial string match algorithm is run on the NP in order that the second line processor does not need to handle the same data rates. The NP provides very fast micro-engines that can process packet data, but with limited code and data space, so the algorithm running on the NP needs to be fast and relatively simple.

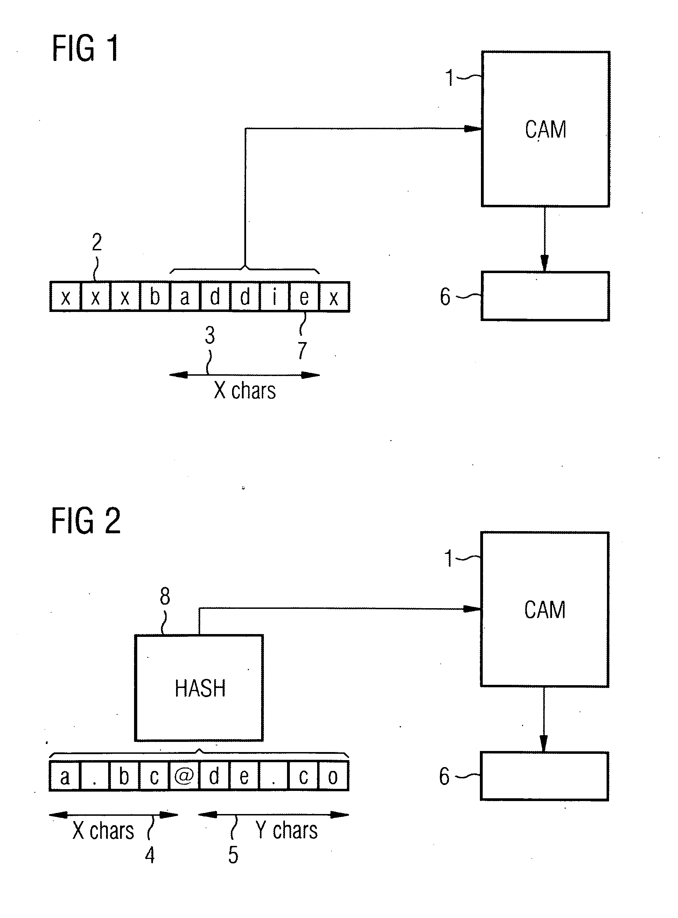

In a first example of the present invention, as shown in Fig.1, a general string search is carried out, using a direct ternary content addressable memory (TCAM) 1, or network search engine (NSE), look up of a potential key word. A data stream 2 includes a partial string 3 of X characters. This method searches the payload of the data stream 2 character-by-character using a pre-compiled look-up table on each character to determine skip values, based on a target dictionary, as used in well known string search algorithms. Skip values are the number of characters which can be skipped (say Y characters) as no keywords can be matched with the current character in the Y^{th} position.

If a character 7 matches an anchor character, such as the last character of any potential keyword, a look-up of the previous X characters is performed directly using the TCAM functionality of the network search engine NSE. This approach is feasible if the value of X is relatively small so that look-up width can be handled by the TCAM with the resulting table being of sufficient size to hold the dictionary. A hit from the TCAM is then used to filter the packet, or session to an appropriate stream handler on the second line processor 6.

Any keyword can be added to the dictionary including binary sequences. Skip tables based on digrams (two consecutive characters) can also be used to increase skipping efficiency provided that the look- up table can be encoded in the data space available for each micro-engine. For instance it is possible to encode a 2 character skip table as a shorter hierarchical data structure by limiting the number of first characters allowed for the digrams.

Another advantage of partial keyword matching is that any substring of the keyword can be chosen for matching, thus less common character sequences can be chosen to reduce false look-up probability and increase performance.

A second example of the present invention, shown in Fig.2 is described with respect to detection of an e- mail address and includes a core hash algorithm for potential target detection. The workload on the NP micro-engines for checking an email address domain name, is reduced by hashing the characters to the right of the anchor character - here the '@'symbol- and before the next delimiter (invalid character). The NP is provided with a fast hash generator 8 and the resulting hash is compared with known values stored in a table contained by the NSE.

The example of Fig. 2 works as follows. Data from X characters 4 to the left of the '@' to Y characters 5 to the right of the '@' are hashed and looked up against a table of hashes generated from a target ID list stored in the CAM. Provided that the values of X and Y are chosen to guarantee that they are smaller than the smallest size contained in the target e-mail ID list, no real targets will be missed.

Although this example is described with a hash function, the characters can also be presented to the TCAM functionality in the NSE without needing to hash this value, but hashing here has the advantage that the address space can be reduced and therefore the width of table that needs to be stored in the NSE.

For the email example, a large number of hits may occur for particular domains, so at least some portion of the local-part of the e-mail address is usually required, with a target address database stored in the NSE.

It is possible that the local-portion of the e-mail address could be only one character long. If target e-mail addresses contain less than X characters in the local-portion of the address, then special handling is provided. By keeping a check of the last delimiter found whilst searching for the '@' character, the NP code can know the size of the potential local-part of the e-mail address. If this is less than X characters long, the extra characters are padded with a known value and a hash look-up can be performed to check for this address. As local-part identifiers less than 4 characters long are not common this does not add significant processing overhead.

A further option is that the scan to the right of the @ character is modified to scan until an invalid character, end-of-packet or maximum Y value is encountered. The resultant packet or the whole transmission control protocol (TCP) session to which it belongs is then filtered to a process on the second line processor.

The present invention provides a method for string searching and subsequent filtering within packet data for identifiers of interest, such as e-mail addresses, at multi-gigabit/s line rates using a partial string search technique. A partial string match in a front line processor, such as a network processor or general purpose hardware unit, filters traffic down to a rate that can be handled by software running on a conventional computing platform such as a general purpose server. The filtering can pass through matches deemed to be safe, such as in firewall applications, or those deemed of concern, for lawful intercept. There may be some cases where a match picks up data which is not actually what is being searched for, but by filtering out those which are definitely of no interest, the data rate is brought down to something manageable by the slower, second line processor which can then carry out a finer selection.

The CAM generally only indicates the presence or absence of a match, but in some cases it can store data which is output if a match occurs, such as an index as to which protocol the packet relates to or which process on the second line processor should be used for further processing.

## Claims

1. A method of filtering high data rate traffic based on its content, the method comprising identifying candidate fixed size partial strings within the traffic; comparing characters within the candidate fixed size partial string with a content addressable memory containing wanted partial string values and identifying matching traffic; wherein the candidate fixed size partial string content includes at least one anchor character; wherein the candidate fixed size partial string size is set to a predetermined number of characters adjacent to the anchor character; and, wherein candidate fixed size partial strings ending in an anchor character are compared with wanted partial string values in the content addressable memory.

2. A method according to any preceding claim, wherein a hash function is applied to the candidate fixed size partial string to reduce the length of the partial string to be less than or equal to a width of the content addressable memory.

3. A method according to claim 1 or claim 2, wherein padding characters are inserted at either end of the candidate fixed size partial string, when the number of characters in the candidate fixed size partial string is less than the number of character spaces available in a width of the content addressable memory.

4. A method according to any preceding claim, wherein the candidate fixed size partial string comprises one of a partial email address, an internet protocol address, a source or destination port number, or other numeric code.

5. A method according to any preceding claim, wherein matching traffic is forwarded to a secondary processor and store for further processing.

## Patentansprüche

1. Verfahren zum Filtern von Datenverkehr mit hoher Datenrate auf der Grundlage seines Inhalts, das Folgendes umfasst: Identifizieren von potentiellen Teilstrings fester Größe im Verkehr, Vergleichen von Zeichen im potentiellen Teilstring fester Größe mit einem Assoziativspeicher, der gesuchte Teilstringwerte enthält, und Identifizieren von übereinstimmendem Verkehr, wobei der Inhalt des potentiellen Teilstrings fester Größe mindestens ein Ankerzeichen aufweist, wobei die Größe des potentiellen Teilstrings fester Größe auf eine vorgegebene Anzahl an das Ankerzeichen angrenzender Zeichen festgelegt ist und wobei potentielle Teilstrings fester Größe, die mit einem Ankerzeichen enden, mit gesuchten Teilstringwerten in dem Assoziativspeicher verglichen werden.

2. Verfahren nach einem vorhergehenden Anspruch, bei dem eine Hash-Funktion auf den potentiellen Teilstring fester Größe angewendet wird, um die Länge des Teilstrings so zu verringern, dass er höchstens so breit wie der Assoziativspeicher ist.

3. Verfahren nach Anspruch 1 oder 2, bei dem an einem der beiden Enden des potentiellen Teilstrings fester Größe Füllzeichen eingesetzt werden, wenn die Anzahl der Zeichen in dem potentiellen Teilstring fester Größe geringer ist als die Anzahl der in einer Breite des Assoziativspeichers verfügbaren Zeichenstellen.

4. Verfahren nach einem der vorhergehenden Ansprüche, bei dem der potentielle Teilstring fester Größe einen Teil einer E-Mail-Adresse, eine Internetprotokolladresse, eine Quell- oder Zielportnummer oder anderen numerischen Code umfasst.

5. Verfahren nach einem der vorhergehenden Ansprüche, bei dem übereinstimmender Verkehr zur weiteren Verarbeitung zu einem zweiten Prozessor und Speicher weitergeleitet wird.

## Revendications

1. Procédé de filtrage de trafic à haut débit basé sur son contenu, le procédé consistant à identifier dans le trafic de possibles chaînes partielles de taille fixe, à comparer des caractères de la possible chaîne partielle de taille fixe avec une mémoire associative contenant des valeurs voulues de chaîne partielle et à identifier le trafic concordant, étant entendu que le contenu de la possible chaîne partielle de taille fixe comprend au moins un caractère d'ancrage, que la taille de la possible chaîne partielle de taille fixe est fixée à un nombre prédéterminé de caractères adjacents au caractère d'ancrage et que les possibles chaînes partielles de taille fixe finissant par un caractère d'ancrage sont comparées avec des valeurs voulues de chaîne partielle dans la mémoire associative.

2. Procédé selon l'une quelconque des revendications précédentes, dans lequel une fonction de hachage est appliquée à la possible chaîne partielle de taille fixe pour réduire la longueur de la chaîne partielle afin qu'elle soit inférieure ou égale à une largeur de la mémoire associative.

3. Procédé selon la revendication 1 ou la revendication 2, dans lequel des caractères de remplissage sont insérés à l'une et l'autre extrémité de la possible chaîne partielle de taille fixe quand le nombre de caractères de la possible chaîne partielle de taille fixe est inférieur au nombre d'espaces pour caractère disponibles dans une largeur de la mémoire associative.

4. Procédé selon l'une quelconque des revendications précédentes, dans lequel la possible chaîne partielle de taille fixe est constituée soit par une adresse partielle de courrier électronique, soit par une adresse de protocole Internet, soit par un numéro de port source ou destinataire, soit par un autre code numérique.

5. Procédé selon l'une quelconque des revendications précédentes, dans lequel le trafic concordant est réexpédié à un processeur et à une mémoire secondaires en vue de son traitement ultérieur.
